# FASCICULE DE BREVET EUROPEEN

(11) **EP 1 254 701 B1**
(45) Date de publication et mention de la délivrance du brevet: **23.03.2005**
(21) Numéro de dépôt: 02290917.0
(22) Date de dépôt: 12.04.2002
(51) Int. Cl.: B01J 13/16

(54) **Procédé de fabrication de microcapsules par polycondensation interfaciale avec de la polyoxyalkyleneamine et des chlorures d'acide**
Verfahren zur Herstellung von Mikrokapseln durch Grenzflächenpolykondensation zwischen Polyoxyalkyleneamin und Säurechlorid
Process of making microcapsules by interfacial polycondensation between polyoxyalkyleneamine and acid chlorides

(30) Priorité: 27.04.2001 FR 0105674
(43) Date de publication de la demande: 06.11.2002
(73) Titulaire: Institut Français du Pétrole, 92852 Rueil-Malmaison Cedex (FR)
(72) Inventeur: Argillier, Jean-Francois, 92210 Saint Cloud (FR); Soto-Portas, Marie-Lidice, 69006 Lyon (FR); Zydowicz, Nathalie, 69800 Saint Priest (FR); Mechin, Francoise, 69006 Lyon (FR); Chomard, Ang-le, 75008 Paris (FR)

(56) Documents cités:
- GB-A- 1 142 649
- GB-A- 1 416 224
- US-A- 3 981 821
- US-A- 5 456 916

## Description

La présente invention concerne un procédé pour l'encapsulation de produits organiques peu polaires par polycondensation interfaciale.

La polycondensation interfaciale est une technique qui permet de fabriquer in situ une membrane en polymère à la surface de gouttelettes d'une émulsion. Cette membrane est réalisée par réaction chimique entre deux types de monomères choisis de façon que la réaction de polymérisation se déroule à l'interface entre la phase dispersée et la phase continue.

L'encapsulation par polycondensation interfaciale est une technique bien connue (Microencapsulation: Methods and Industrial Applications, Edited by S. Benita, Marcel Dekker 1996) qui fait généralement intervenir deux types de monomères complémentaires, l'un d'eux étant soluble dans la phase aqueuse, l'autre étant soluble dans la phase organique. Les exemples d'applications industrielles de cette technique concernent essentiellement le domaine phytosanitaire (par exemple le document FR-2419676), pour la production de microcapsules d'insecticides, d'herbicides et de fongicides avec des membranes de polyamide, polyurée ou polyuréthane, le domaine biomédical et vétérinaire.

La présente invention concerne en particulier la polycondensation à la surface de gouttelettes d'émulsions directes huile/eau et la formation de microcapsules dont le coeur est constitué d'un produit organique peu polaire enfermé dans une membrane de polyamide. Le matériau à encapsuler est, soit directement le produit organique peu polaire, soit un autre matériau, ou additif, qui est solubilisé ou bien dispersé dans le produit organique peu polaire.

Ainsi, la présente invention concerne un procédé d'obtention de microcapsules comprenant principalement les étapes suivantes:
- préparation d'une phase organique peu soluble dans l'eau contenant une quantité déterminée de chlorures d'acide,
- formation d'une émulsion de ladite phase organique dans une phase aqueuse,
- addition dans l'émulsion aqueuse d'une quantité d'au moins une polyoxyalkylène polyamine,
- réaction des monomères contenant les fonctions amines et chlorures d'acide pour former une membrane en polyamide autour de la phase organique émulsionnée,
- récupération des microcapsules obtenues.

La phase aqueuse peut contenir un additif tensioactif.

L'additif peut être un polymère ayant une fonction tensioactive, par exemple du polyvinylalcool PVA partiellement hydrolysé.

Le rapport molaire R des fonctions amines sur les fonctions chlorures peut être compris entre 1 et 30, et de préférence entre 4 et 10.

La polyamine peut être une diamine de formule générale : 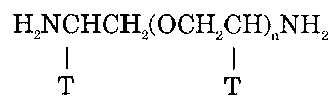 avec T méthyl (CH₃) ou hydrogène (H), et n compris entre 2 et 40, préférentiellement entre 2 et 8.

Dans une variante, n est environ 2,6.

Dans une autre variante, la polyamine peut être une triamine de formule générale : 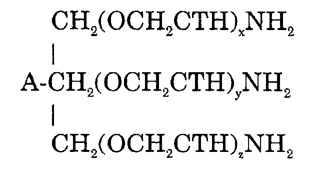
A est un groupement alkyl contenant de 1 à 20 atomes de carbone, préférentiellement A est un groupement éthyl,
T est méthyl (CH₃) ou hydrogène (H),
x, y et z chacun indépendamment compris entre 1 et 8.

Le nombre de fonctions amines peut être apporté en outre par au moins un ajout de diéthylènetriamine.

Lesdits chlorures d'acide peuvent être choisis parmi le chlorure de sébacoyle, le chlorure de trimésoyle, ou leurs mélanges.

Un mélange de chlorure d'acide de sébacoyle et de trimésoyle peut être respectivement de 90% et 10% en fonctions COCl.

La quantité de chlorure d'acide peut être comprise entre 0,3 et 4 moles de COCl par millilitre de phase organique, de préférence entre 1 et 2 moles par millilitre.

L'invention concerne également une microcapsule contenant une phase organique peu soluble dans l'eau enveloppée par une membrane en polyamide résultant de la réaction entre au moins une polyoxyalkylène polyamine et des chlorures d'acide. Selon l'invention, la polyamine comporte au moins l'une des amines suivantes :
une diamine de formule générale : 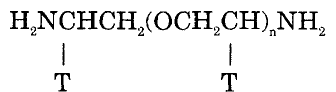 avec T méthyl (CH₃) ou hydrogène (H), et n compris entre 2 et 40, préférentiellement entre 2 et 8, et en particulier n est environ 2,6 ;
une triamine de formule générale : 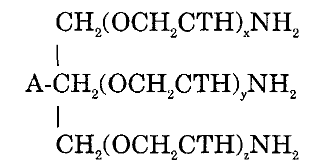
A est un groupement alkyl contenant de 1 à 20 atomes de carbone, préférentiellement A est un groupement éthyl,
T est méthyl (CH₃) ou hydrogène (H),
x, y et z chacun indépendamment compris entre 1 et 8.

Les fonctions chlorures d'acide peuvent être apportées par du chlorure de sébacoyle, du chlorure de trimésoyle, ou leurs mélanges.

Les fonctions amines peuvent être apportées par un ajout d'autres polyamines, notamment par de la diéthylènetriamine.

Un des avantages principaux du procédé selon l'invention est que l'on peut contrôler l'épaisseur, les propriétés mécaniques et les propriétés de relargage de la microcapsules en polyamide, d'une part en contrôlant l'hydrolyse du chlorure d'acide par sa concentration initiale, la durée d'agitation et le temps de réaction, et d'autre part, par l'addition de monomères trifonctionnels.

Une des applications de ces capsules peut être l'isolation thermique en utilisant comme phase organique un matériau assez isolant, par exemple des produits pétroliers de coupes légères ou autre, des huiles végétales, des dérivés chimiques du glycol, etc..., la convection étant bloquée par la structure en capsules. Avantageusement, on pourra utiliser des matériaux à changement de phases, par exemple constitué d'un mélange de composés chimiques de la famille des alcanes : paraffines, cires, alcools gras, acides gras, etc..

Les chlorures d'acide (COCl) utilisés peuvent être, par exemple, choisis dans la liste suivante :
chlorure de adipoyle
chlorure de sebacoyle
chlorure de succinyle
chlorure de phtaloyle (meta, para)
chlorure de 4,4-sulphonyldibenzoyle
chlorure de 1,6-hexanedisulphonyle
chlorure de 1,4-cyclohexanedicarbonyle
chlorure de 1,2-ethanedisulphonyle
chlorure de 4,4-biphenyldicarbonyle
phosgène
chlorure de dimethoxycarbonylterephtaloyle
trichlorure 1,3,5-benzenetricarbonyle, ou chlorure de trimésoyle

De préférence, le chlorure de sébacoyle ou/et le chlorure de trimésoyle, ou en mélanges, sont utilisés.

La polyoxyalkylèneamine utilisée dans le cadre de l'invention est une polyamine, préférentiellement une di ou tri amine, suffisamment soluble dans l'eau, qui peut être définie par:
Dans le cas d'une diamine: 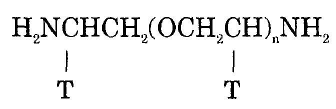 Avec T pouvant être méthyl (CH₃) ou de l'hydrogène (H), et n compris entre 2 et 40, et préférentiellement entre 2 et 8.

Parmi ces composés, la Jeffamine D-230 est le composé ayant pour n une valeur moyenne de 2,6.

Dans le cas d'une triamine: 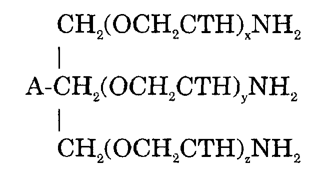 Avec:
- A est un groupement alkyl contenant de 1 à 20 atomes de carbone, préférentiellement A est un groupement éthyl,
- T est méthyl (CH₃) ou de l'hydrogène (H),
- x, y et z chacun indépendamment compris entre 1 et 8.

Parmi ces composés, la Jeffamine T-403 (HUNSTMAN Int.) : A éthyle, T méthyle et x+y+z=5,3.

Les autres amines utilisées en combinaison avec la polyoxyalkylène polyamine peuvent être :
Ethylènediamine
Hexaméthylènediamine
Ethylènediamine
Pipérazine
1,3-propylènediamine
tétraméthylènediamine
p-phénylènediamine
Bis(4-aminocyclohexyl)méthane
1,4-Bis (aminométhyl) cyclohexane
Bis (p-aminophényl) méthane
l-lysine
4,4'-oxydianiline
4,4'-methylenedianiline
biopolymères, protéines, polysaccharides
Diéthylènetriamine
Triéthylènetétramine
Tétraéthylènepentamine

La phase organique peut être n'importe quel liquide (à la température de travail) peu polaire et peu miscible dans l'eau. Dans un exemple selon l'invention, la phase organique est un matériau à changement de phase, par exemple une paraffine ou un mélange de paraffines. Dans ce cas, la température de travail doit être supérieure à la température de fusion de la paraffine afin de pouvoir former une émulsion liquide/liquide pour la mise en oeuvre du procédé.

Les produits utilisés dans les exemples sont (les noms d'identification utilisés par la suite sont entre parenthèses) :
Amines : Jeffamine D-230 (**JA**) :
   Code et nom du produit 75 851 Jeffamine D-230
Fournisseur: HUNSTMAN Int. Trading Corp, Nom chimique et/ou famille ou description : Polyalkylamine, N° CAS : [9046-10-0], Aspect : liquide transparent.
   Diethylenetriamine (DETA)
Fournisseur : ALDRICH, N° CAS [111-40-0], Liquide.
Chlorures d'acide :
   Chlorure de Sebacoyle (**CS**)
Fournisseur : ALDRICH, N°CAS [111-19-3], Liquide
   1,3,5-benzenetricarbonyl trichloride ou chlorure de trimésoyle (**TMC**)
Fournisseur : ALDRICH, N° CAS [4422-95-1], Solide

### Eau déminéralisée

Paraffine LINPAR 18-20 commercialisé par la société CONDEA Augusta S.p.A.

Tensioactif :
Polyvinylalcool (**PVA**)
Hydrolysé à 88%, Mw = 22000 g/mol, Fournisseur : JANSSEN CHIMICA- N°CAS [9002-89-5]

Le protocole d'obtention des microcapsules peut être le suivant :

### a) Préparation de la solution aqueuse du tensioactif:

Dissolution à 60°C du tensioactif (PVA) à 1% en poids dans 150 ml d'eau déminéralisée.

### b) Etape d'émulsification:

Dans un réacteur à double enveloppe (eau en circulation à 28°C), on additionne les 150 ml de la solution de PVA. L'agitation est fixée à 600 tour/min (6 palettes en PTFE) et 30 ml de la phase organique (paraffine Linpar 18-20 et le(s) chlorure(s) d'acide (CS ou TMC ou CS+TMC) est additionnée goutte à goutte. Le temps d'émulsification est de 5, 15 ou 60 minutes.

### c) Etape de réaction de polycondensation : formation des capsules :

Après la formation de l'émulsion, la vitesse d'agitation est fixée à 300 tour/min. On ajoute 150 ml d'une solution aqueuse d'amines (JA ou JA+DETA) additionnée goutte à goutte (l'addition dure environ 10 minutes). La réaction se poursuit pendant 15 ou 60 minutes, selon les exemples.

Le volume total d'émulsion est de 330 ml, la concentration de PVA est de 0,5% par rapport à l'eau.

Les quantités respectives d'amines et de chlorure d'acide sont définies par un rapport R égal au rapport molaire des fonctions amines sur les fonctions chlorure d'acide apportées par les différents constituants. R est compris entre 1 et 30, de préférence compris entre 4 et 10, et dans les exemples suivants égal à environ 5, sauf en présence d'une base inorganique Na2CO3 où R est égal à environ 1. En l'absence de base inorganique, un excès de fonctions amines permet de neutraliser, au moins partiellement, l'acidité formée au cours de la réaction de polycondensation.

Dans le cas de l'utilisation de composés trifonctionnels, les fonctions NH2 de JA et DETA sont sensiblement réparties équitablement.

Dans le cas d'utilisation d'un mélange de TMC et de CS, le taux de fonctions COCl est sensiblement respectivement de 10% et 90%.

Dans les exemples suivants, on utilise 6, 20, 30, 60 ou 100 millimole de COCl dans les 30 ml de base organique du type paraffine.

### d) Récupération des capsules :

A la fin de la réaction, les capsules sont récupérées par soutirage de la phase aqueuse. La séparation est simplifiée grâce à la différence de densité entre les deux phases qui permet d'observer un crémage des microcapsules. Les capsules sont lavées trois fois à l'eau chaude, puis trois fois au cyclohexane en filtrant sous vide.

### e) Séchage des capsules :

Une fois récupérées par filtration, les capsules sont, soit lyophilisées, soit séchées à la température ambiante.

Le rendement d'encapsulation est estimé de la manière suivante : à 50 ml de mélange réactionnel (solution aqueuse + microcapsules), on ajoute 30 ml de cyclohexane. Après agitation magnétique, on centrifuge pendant 10 minutes à 3000 tour/min. Le mélange cyclohexane-paraffine est récupéré avec une pipette Pasteur, puis le cyclohexane est évaporé sous rotavap. La paraffine non encapsulée et récupérée au fond du ballon est ensuite pesée. Le rendement est 100 fois le rapport de la masse de paraffine récupérée sur la masse de paraffine initiale.

### RESULTATS

Les exemples suivants non limitatifs permettent d'illustrer le procédé de la présente invention. Dans chacun de ces exemples, on a rappelé le type de monomère utilisé et les conditions de la réaction.

### Formulation (a)

Amines : JA + DETA
Chlorure d'acide : CS
20.10⁻³ mole de COCl
R=5
Temps d'émulsification = 15 minutes
Durée réaction = 15 minutes

On obtient dans ces conditions un rendement d'encapsulation de 8%. Comme observé par microscopie optique et microscopie électronique à balayage, les capsules sont sphériques. La granulométrie des microcapsules est caractérisée par Ø_{0.5}=107 µm. Le faible rendement est probablement du à une hydrolyse d'une partie importante du chlorure d'acide initial pendant la réaction.

### Formulation (b)

Amines : JA + DETA
Chlorure d'acide : CS
60.10⁻³ mole de COCI
R=5
Temps d'émulsification = 15 minutes
Durée réaction = 15 minutes

On obtient dans ces conditions un rendement d'encapsulation de 60%. Comme observé par microscopie optique et microscopie électronique à balayage, les capsules sont sphériques. La granulométrie des microcapsules est caractérisée par Ø₀₅=97 µm. L'augmentation de la concentration en chlorure d'acide a permis d'augmenter le rendement d'encapsulation.

### Formulation (c)

Amines : JA + DETA
Chlorure d'acide : CS
60.10⁻³ mole de COCl
R=5
Temps d'émulsification = 5 minutes
Durée réaction = 15 minutes
Rendement d'encapsulation = 90%

La diminution du temps d'émulsification permet de limiter l'hydrolyse du chlorure d'acide et en conséquence permet d'augmenter le rendement de la réaction. Notons que, comme observé par microscopie optique et microscopie électronique à balayage, les capsules sont sphériques. La granulométrie des microcapsules est caractérisée par Ø_{0.5}=167 µm. On observe une mauvaise élasticité de la membrane par microscopie optique lors de cycle de chauffage/refroidissement. Notons d'autre part, que lors de la récupération des capsules par lyophilisation un aspect de "gateau" (agrégats) est obtenu, de même après séchage à la température ambiante.

### Formulation (d)

Amines : JA + DETA
Chlorure d'acide : CS
100.10⁻³ mole de COCI
R = 5
Temps d'émulsification = 5 minutes
Durée réaction = 15 minutes

On obtient dans ces conditions un rendement d'encapsulation de 70%. La granulométrie des microcapsules est caractérisée par Ø_{0.5}=104 µm. Une trop forte augmentation de la concentration en chlorure d'acide n'est pas favorable (voir les résultats de la formulation b). Notons d'autre part, que lors de la récupération des capsules par lyophilisation un aspect de "pâte" est obtenu.

### Formulation (e)

Amines : JA + DETA
Chlorure d'acide : CS
60.10⁻³ mole de COCl
R = 1
Base inorganique
Temps d'émulsification = 5 minutes
Durée réaction = 15 minutes

Dans cette formulation on utilise une base inorganique pour neutraliser l'acidité libérée lors de la réaction de synthèse. On obtient dans ces conditions un rendement d'encapsulation de 80%. Comme observé par microscopie optique et microscopie électronique à balayage, les capsules sont sphériques. La granulométrie des microcapsules est caractérisée par Ø_{0.5}=152 µm. Notons d'autre part que lors de la récupération des capsules par séchage à température ambiante un aspect de "colle" est obtenu.

### Formulation (f)

Amines : JA
Chlorure d'acide : TMC
30.10⁻³ mole de COCl
R=5
Temps d'émulsification = 5 minutes
Durée réaction = 15 minutes

Dans cette formulation on utilise comme chlorure d'acide le chlorure de trimésoyle et uniquement de la Jeffamine comme amine. On obtient dans ces conditions un rendement d'encapsulation de 90%. Comme observé par microscopie optique et microscopie électronique à balayage, les capsules sont plutôt non sphériques. La granulométrie des microcapsules est caractérisée par Ø_{0.5}=202 µm. Notons d'autre part, que lors de la récupération des capsules par séchage à température ambiante, on obtient un aspect d"'agrégats"; par contre par lyophilisation on obtient une poudre. L'introduction d'un monomère trifonctionnel (TMC) permet d'obtenir un polymère réticulé.

### Formulation (g)

Amines : JA
Chlorure d'acide : TMC
6.10⁻³ mole de COCl
R=5
Temps d'émulsification = 5 minutes
Durée réaction = 15 minutes

Dans cette formulation on a diminué la concentration en chlorure d'acide à cause de la faible solubilité du TMC dans la phase organique. On obtient dans ces conditions un rendement d'encapsulation de 80%. Une certaine concentration d'acide est donc nécessaire. La granulométrie des microcapsules est caractérisée par Ø_{0.5}=138 µm. Notons d'autre part que lors de la récupération des capsules par séchage à température ambiante, on observe un aspect d'"agrégats", de même que par lyophilisation.

### Formulation (h)

Amines : JA
Chlorure d'acide : CS - TMC
30.10⁻³ mole de COCl
R=5
Temps d'émulsification = 5 minutes
Durée réaction = 15 minutes

Dans cette formulation on utilise un mélange de chlorures d'acide et uniquement de la Jeffamine comme amine. On obtient dans ces conditions un rendement d'encapsulation de 90%. Comme observé par microscopie optique et microscopie électronique à balayage, les capsules sont sphériques. La granulométrie des microcapsules est caractérisée par Ø_{0.5}=96 µm. Notons d'autre part que lors de la récupération des capsules par lyophilisation on observe un aspect d"'agrégats".

### Formulation (i)

Amines: JA
Chlorure d'acide : CS + TMC
30.10⁻³ mole de COCl
R = 5
Temps d'émulsification = 5 minutes
Durée réaction = 60 minutes

On augmente la durée de réaction à 60 minutes. On obtient dans ces conditions un rendement d'encapsulation de 90%. Comme observé par microscopie optique et microscopie électronique à balayage, les capsules sont sphériques. La granulométrie des microcapsules est caractérisée par Ø_{0.5}=127 µm. Notons d'autre part que lors de la récupération des capsules par séchage à température ambiante on observe un aspect de "agrégats". On observe une très bonne élasticité de la membrane par microscopie optique lors de cycle de chauffage/refroidissement.

### Formulation (j)

Amines : JA + DETA
Chlorure d'acide : CS + TMC
30.10⁻³ mole de COCl
R=5
Temps d'émulsification = 5 minutes
Durée réaction = 15 minutes

Dans cette formulation on utilise un mélange de chlorures d'acide et un mélange d'amines dont la Jeffamine. On obtient dans ces conditions un rendement d'encapsulation de 90%. Comme observé par microscopie optique et microscopie électronique à balayage, les capsules sont sphériques. La granulométrie des microcapsules est caractérisée par Ø_{0.5}=163 µm. Notons d'autre part que lors de la récupération des capsules par lyophilisation on observe une poudre et un aspect "agrégats" par séchage à l'ambiante. L'épaisseur de la membrane déterminée par MEB est de l'ordre de 650 nm. Ces résultats sont très intéressants. L'introduction des deux monomères trifonctionnels (TMC et DETA) permet d'obtenir un polymère réticulé.

### Formulation (k)

Amines : JA + DETA
Chlorure d'acide : CS + TMC
30.10⁻³ mole de COCl
R=5
Temps d'émulsification = 5 minutes
Durée réaction = 60 minutes

Dans cette formulation, on utilise un mélange de chlorures d'acide et d'amines et un temps de réaction de 60 minutes. On obtient dans ces conditions un rendement d'encapsulation de 90%. Comme observé par microscopie optique et microscopie électronique à balayage, les capsules sont sphériques. La granulométrie des microcapsules est caractérisée par Ø_{0.5}=249 µm. Notons d'autre part, que lors de la récupération des capsules par lyophilisation on observe une poudre et un aspect "agrégats" par séchage à l'ambiante. Ces résultats sont très intéressants.

## Revendications

1. Procédé d'obtention de microcapsules comprenant principalement les étapes suivantes:
a) préparation d'une phase organique peu soluble dans l'eau contenant une quantité déterminée de chlorures d'acide,
b) formation d'une émulsion de ladite phase organique dans une phase aqueuse,
c) addition dans l'émulsion aqueuse d'une quantité d'au moins une polyoxyalkylène polyamine,
d) réaction des monomères contenant les fonctions amines et chlorures d'acide pour former une membrane en polyamide autour de la phase organique émulsionnée,
e) récupération des microcapsules obtenues.

2. Procédé selon la revendication 1, dans lequel ladite phase aqueuse contient un additif tensioactif.

3. Procédé selon la revendication 2, dans lequel ledit additif est un polymère ayant une fonction tensioactive, par exemple du polyvinylalcool PVA partiellement hydrolysé.

4. Procédé selon l'une des revendications précédentes, dans lequel le rapport molaire R des fonctions amines sur les fonctions chlorures est compris entre 1 et 30, et de préférence entre 4 et 10.

5. Procédé selon l'une des revendications précédentes, dans lequel ladite polyamine est une diamine de formule générale : 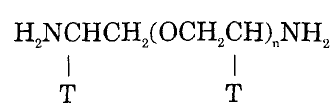 avec T méthyl (CH₃) ou hydrogène (H), et n compris entre 2 et 40, préférentiellement entre 2 et 8.

6. Procédé selon la revendication 5, dans lequel n est environ 2,6.

7. Procédé selon l'une des revendications 1 à 4, dans lequel ladite polyamine est une triamine de formule générale : 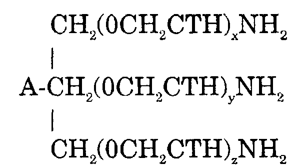
- A est un groupement alkyl contenant de 1 à 20 atomes de carbone, préférentiellement A est un groupement éthyl,
- T est méthyl (CH₃) ou hydrogène (H),
- x, y et z chacun indépendamment compris entre 1 et 8.

8. Procédé selon l'une des revendications précédentes, dans lequel le nombre de fonctions amines est apporté en outre par au moins un ajout de diethylènetriamine.

9. Procédé selon l'une des revendications précédentes, dans lequel lesdits chlorure d'acide sont choisis parmi le chlorure de sébacoyle, le chlorure de trimésoyle, ou leurs mélanges.

10. Procédé selon la revendication 9, dans lequel un mélange de chlorure d'acide de sébacoyle et de trimésoyle est respectivement de 90% et 10% en fonctions COCl.

11. Procédé selon l'une des revendications précédentes, dans lequel ladite quantité de chlorure d'acide est comprise entre 0,3 et 4 moles de COCl par millilitre de phase organique, de préférence entre 1 et 2 moles par millilitre.

12. Microcapsule contenant une phase organique peu soluble dans l'eau enveloppée par une membrane en polyamide résultant de la réaction entre au moins une polyoxyalkylène polyamine et des chlorures d'acide, **caractérisée en ce que** ladite polyamine comporte au moins l'une des amines suivantes :
- une diamine de formule générale : 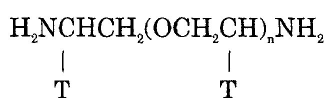 avec T méthyl (CH₃) ou hydrogène (H), et n compris entre 2 et 40, préférentiellement entre 2 et 8, et en particulier n est environ 2,6 ;
- une triamine de formule générale : 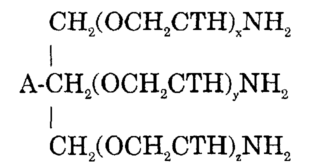
- A est un groupement alkyl contenant de 1 à 20 atomes de carbone, préférentiellement A est un groupement éthyl,
- T est méthyl (CH₃) ou hydrogène (H), x, y et z chacun indépendamment compris entre 1 et 8.

13. Microcapsule selon la revendication 12, dans laquelle les fonctions chlorures d'acide sont apportées par du chlorure de sébacoyle, du chlorure de trimésoyle, ou leurs mélanges.

14. Microcapsule selon l'une des revendications 12 ou 13, dans laquelle les fonctions amines sont apportées par un ajout d'autres polyamines, notamment par de la diéthylènetriamine.

## Patentansprüche

1. Verfahren zum Erhalt von Mikrokapseln, weiches hauptsächlich die folgenden Stufen umfasst:
a) Herstellung einer kaum in Wasser löslichen organischen Phase, die eine bestimmte Menge von Säurechloriden enthält,
b) Herstellung einer Emulsion der organischen Phase in einer wässrigen Phase
c) Zugabe in die wässrige Emulsion von einer Menge wenigstens eines Polyoxyalkylenpolyamins,
d) Reaktion von Monomeren, die Aminfunktionen enthalten, und Säurechloriden, um eine Polyamidmembran um die emulgierte organische Phase herum zu bilden,
e) Gewinnung der erhaltenen Mikrokapseln.

2. Verfahren nach Anspruch 1, bei dem die wässrige Phase einen tensidaktiven Zusatz enthält.

3. Verfahren nach Anspruch 2, bei dem der Zusatz ein Polymer ist, das eine tensidaktive Funktion hat, zum Beispiel teilweise hydrolysierter Polyvinylalkohol PVA.

4. Verfahren nach einem der vorhergehenden Ansprüche, bei dem das Molverhältnis R der Aminfunktionen zu den Chloridfunktionen zwischen 1 und 30 und vorzugsweise zwischen 4 und 10 liegt.

5. Verfahren nach einem der vorhergehenden Ansprüche, bei dem das Polyamin ein Diamin mit allgemeiner Formel ist: 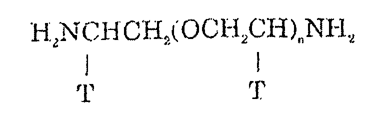 mit T Methyl (CH₃) oder Wasserstoff (H) und n zwischen 2 und 40, vorzugsweise zwischen 2 und 8.

6. Verfahren nach Anspruch 5, bei dem n etwa 2,6 ist.

7. Verfahren nach einem der Ansprüche 1 bis 4, bei dem das Polyamin ein Triamin mit allgemeiner Formel ist: 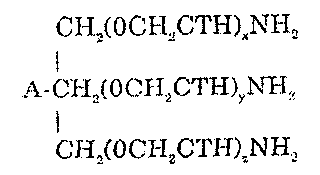
- A ist eine Alkylgruppe, die 1 bis 20 Kohlenstoffatome enthält, vorzugsweise ist A eine Ethylgruppe
- T ist Methyl (CH₃) oder Wasserstoff (H)
- x, y und z liegen jedes unabhängig zwischen 1 und 8.

8. Verfahren nach einem der vorhergehenden Ansprüche, bei dem die Anzahl von Aminfunktionen außerdem durch wenigstens eine Zugabe von Diethylentriamin zugeführt wird.

9. Verfahren nach einem der vorhergehenden Ansprüche, bei dem die Säurechloride gewählt werden unter Sebacoylchlorid, 1,3,5-Benzoltricarbonylchlorid (Trimesoylchlorid) und deren Gemischen.

10. Verfahren nach Anspruch 9, bei dem ein Gemisch von Sebacoylsäurechlorid und 1,3,5-Benzoltricarbonylsäurechlorid (Trimesoylasäurechlorid) jeweils 90% und 10% an COCI-Funktionen ist.

11. Verfahren nach einem der vorhergehenden Ansprüche, bei dem die Säurechloridmenge zwischen 0,3 und 4 mol COCI pro ml organischer Phase, bevorzugt vorzugsweise zwischen 1 und 2 mol pro ml liegt.

12. Mikrokapsel, die eine organische Phase enthält, die in Wasser kaum löslich ist, eingehüllt durch eine Polyamidmembran, die aus der Reaktion zwischen wenigstens einem Polyoxyalkylenpolyamin und Säurechloriden resultiert, **dadurch gekennzeichnet, dass** das Polyamin wenigstens eines der folgenden Amine umfasst:
- ein Diamin mit allgemeiner Formel 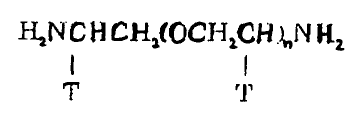 mit T-Methyl (CH₃) oder Wasserstoff (H) und n zwischen 2 und 40, vorzugsweise zwischen 2 und 8 und insbesondere ist n etwa 2,6;
- ein Triamin mit allgemeiner Formel 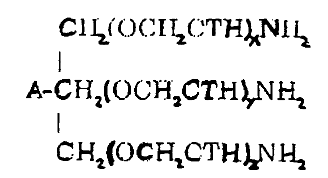
- A ist eine Alkylgruppe, die 1 bis 20 Kohlenstoffatome enthält, vorzugsweise ist A eine Ethylgruppe,
- T ist Methyl (CH₃) oder Wasserstoff (H)
x, y und z liegen jedes unabhängig zwischen 1 und 8.

13. Mikrokapsel nach Anspruch 12, bei der die Säurechloridfunktionen durch Sebacoylchlorid, 1,3,5-Benzoltricarbonylchlorid (Trimesoylchlorid) oder deren Gemische zugeführt wird.

14. Mikrokapsel nach einem der Ansprüche 12 oder 13, bei der die Aminfunktionen durch Zugabe anderer Polyamine, insbesondere durch Diethylentriamin zugeführt werden.

## Claims

1. Process for obtaining microcapsules principally comprising the following steps:
a) preparation of an organic phase of low solubility in water containing a determined quantity of acid chlorides,
b) formation of an emulsion of the said organic phase in an aqueous phase,
c) addition to the aqueous emulsion of a quantity of at least one polyoxyalkylene polyamine,
d) reaction of the monomers containing the amine and acid chloride functions to form a polyamide membrane around the emulsified organic phase,
e) recovery of the microcapsules obtained.

2. Process as described in claim 1, in which the said aqueous phase contains a surfactant additive.

3. Process as described in claim 2, in which the said additive is a polymer having a surfactant function, for example partially hydrolysed PVA polyvinyl alcohol.

4. Process as described in one of the preceding claims, in which the molar ratio R of the amine functions over the chloride functions is between 1 and 30, and preferably between 4 and 10.

5. Process as described in one of the preceding claims, in which the said polyamine is a diamine of general formula: 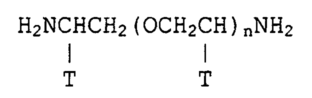 with T methyl (CH₃) or hydrogen (H), and n between 2 and 40, and preferably between 2 and 8.

6. Process as described in claim 5, in which n is approximately 2.6.

7. Process as described in one of claims 1 to 4, in which the said polyamine is a triamine of general formula: 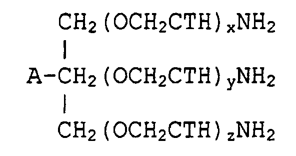
- A is an alkyl group containing from 1 to 20 carbon atoms, and preferably A is an ethyl group,
- T is methyl (CH₃) or hydrogen (H),
- x, y and z each independently between 1 and 8.

8. Process as described in one of the preceding claims, in which the number of amine functions is also contributed by at least one addition of diethylenetriamine.

9. Process as described in one of the preceding claims, in which the said acid chlorides are selected from sebacoyl chloride, trimesoyl chloride, or their mixtures.

10. Process as described in claim 9, in which a mixture of sebacoyl and trimesoyl acid chloride is respectively 90% and 10% by COCl functions.

11. Process as described in one of the preceding claims, in which the said quantity of acid chloride is between 0.3 and 4 moles of COCl per millilitre of organic phase, and preferably between 1 and 2 moles per millilitre.

12. Microcapsule containing an organic phase of low solubility in water enveloped by a polyamide membrane resulting from the reaction between at least one polyoxyalkylene polyamine and acid chlorides, ***characterised by** the fact that* the said polyamine includes at least one of the following amines:
- a diamine of general formula: 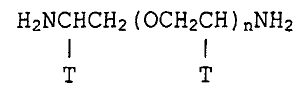 with T methyl (CH₃) or hydrogen (H), and n between 2 and 40, preferably between 2 and 8, and in particular n is approximately 2.6
- a triamine of general formula: 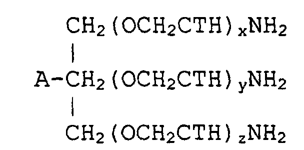
- A is an alkyl group containing from 1 to 20 carbon atoms, and preferably A is an ethyl group,
- T is methyl (CH₃) or hydrogen (H), x, y and z each independently between 1 and 8.

13. Microcapsule as described in claim 12, in which the acid chloride functions are contributed by sebacoyl chloride, trimesoyl chloride, or their mixtures.

14. Microcapsule as described in one of claims 12 or 13, in which the amine functions are contributed by an addition of other polyamines, in particular by diethylenetriamine.
